# EUROPÄISCHE PATENTSCHRIFT

(11) **EP 2 014 959 B1**
(45) Veröffentlichungstag und Bekanntmachung des Hinweises auf die Patenterteilung: **05.01.2011**
(21) Anmeldenummer: 07405201.0
(22) Anmeldetag: 12.07.2007
(51) Int. Cl.: F16K 1/20

(54) **Verschluss, vorzugsweise für einen Kühlschrank**
Closure in particular for a refrigerator
Fermeture, notamment pour un réfrigérateur

(43) Veröffentlichungstag der Anmeldung: 14.01.2009
(73) Patentinhaber: Forster Küchen- & Kühltechnik AG, 9320 Arbon (CH)
(72) Erfinder: Oechsle, Hans-Peter, 6830 Rankweil (AT)
(74) Vertreter: Luchs, Willi

(56) Entgegenhaltungen:
- CA-A1- 1 138 376
- JP-A- 8 216 705
- US-B1- 6 240 957

## Beschreibung

Die Erfindung betrifft einen Verschluss, insbesondere für Kühlschränke und ähnliche in Massenproduktion gefertigte Geräte, gemäss dem Oberbegriff des Anspruches 1.

Bei Geräten dieser Art wird während des Produktionsprozesses eine bestimmte Menge flüssigen oder halbflüssigen Füllmittels in bestimmte Innenräume des Gerätes eingefüllt. Kühlschränke und ähnliche Geräte weisen bekanntlich zu diesem Zweck ein im Kühlschrankgehäuse angeordnetes Füllloch auf, durch welches während des Fertigungsprozesses ein später aufschäumendes Füllmittel als thermisches Isoliermittel in den Zwischenraum des doppelwandigen Gehäuses eingespritzt wird. Dieser Vorgang wird bekanntlich mittels einer in das Füllloch eingeführten Spritzpistole oder einer ähnlichen Vorrichtung durchgeführt, die nach Beendigung des Einfüllvorgangs wieder aus dem Füllloch entfernt wird. Anschliessend schäumt das eingespritzte Füllmittel soweit auf, bis der gesamte Innenraum des Kühlschrankgehäuses voll gefüllt ist.

Um zu vermeiden, dass dabei das eingespritzte Füllmittel aus dem Innenraum des Gerätes herausquillt, ist das Füllloch mit Hilfe des Fülllochverschlusses verschliessbar. Hierbei ist es einerseits wichtig, dass der Verschluss nach Beendigung des Einspritzvorganges dauerhaft den dichten Abschluss des Füllloches gewährleistet. Andererseits muss er leicht einbaubar sein und möglichst bedienungsfrei arbeiten, um Verzögerungen oder Störungen des Produktionsprozesses zu vermeiden.

Im gattungsbildenden Dokument US-A-6 240 957 ist ein Verschluss für einen Benzintank geoffenbart, bei dem der Verschlussdeckel durch die Federkraft einer separaten Torsionsfeder mit einem um seine Schwenkachse wirkenden Drehmoment in Schliessrichtung beaufschlagt wird. Mit diesem separaten Federelement besteht eine relativ aufwendige Konstruktion bzw. Montage des Deckels am Flansch.

Auch die Verschlüsse nach den Dokumenten CA-A1-1 138 376 bzw. JP 08 216705 sind für Brennstoffbehälter vorgesehen und weisen jeweils ein nachteiliges separates Federelement aus einem üblichen Material auf, dessen Federkraft den Verschlussdeckel in Schliessrichtung beaufschlagt.

Um diese Aufgabe zu lösen, hat man bisher verschiedenartige Verschlüsse vorgeschlagen. So sind Schraubverschlüsse bekannt, bei denen man den Verschlussdeckel jedesmal in einem Füllstutzen des Füllloches ein- und ausschrauben muss. Es versteht sich von selbst, dass ein solcher Verschluss im Hinblick auf einen raschen und leichten Einbau des Verschlusses nachteilig ist.

Bei einem anderen bekannten Verschluss ist das Verschlussorgan durch eine dehnbare Membrane gebildet, die, sich trichterförmig verformend, den Mündungskopf der Spritzpistole aufnimmt und bei Entfernung der Spritzpistole das Füllloch aufgrund der Elastizität der Membrane wieder schliesst. Hierbei ist es von Nachteil, dass der Verschluss aufgrund seiner Beschaffenheit nicht immer und nicht dauerhaft die einwandfreie Dichtigkeit des Verschlusses gewährleistet.

Verschlüsse der eingangs genannten Art haben zwar gegenüber den vorstehend beschriebenen Verschlüssen den Vorteil einer einfacheren Ausbildung. Es ist jedoch bei ihnen ebenfalls von Nachteil, dass sie keinen einwandfrei dichten Abschluss des Füllfoches sicherstellen, da das Zuklappen des Deckels erst durch das Aufschäumen des im Innenraum des Kühlschrankgehäuses eingespritzten Füllmittels bewirkt wird.

Der Erfindung liegt die Ausgabe zugrunde, die vorstehend geschilderten Nachteile zu vermeiden und einen Verschluss der eingangs genannten Art zu schaffen, der eine wirtschaftliche und einfache Massenfertigung ermöglicht, leicht einbaubar ist und im Betrieb unmittelbar nach Beendigung des Füllvorganges selbsttätig sicher schliesst und dann auch dauerhaft verschlossen bleibt.

Diese Aufgabe wird erfindungsgemäss dadurch gelöst, dass der Verschluss mindestens ein Federelement aufweist, dessen Federkraft den Verschlussdeckel mit einem um seine Schwenkachse wirkenden Drehmoment in Schliessrichtung beaufschlagt.

Auf diese Weise ist es möglich, beim Füllvorgang zuerst den Verschlussdeckel mit dem Mundstück der Spritzpistole unter Überwindung des auf ihn wirkende Drehmomentes aufzuklappen, wodurch das Füllloch geöffnet wird. Wird die Spritzpistole wieder entfernt, sorgt dann das auf den Verschlussdeckel stets wirkende Drehmoment dafür, dass der Deckel sofort gegen den Dichtsitz des Flanschringes zurückschwenkt und das Füllloch wieder verschliesst, bevor das aufschäumende Füllmittel den Bereich des Füllloches erreicht hat. Durch die selbsttätige Arbeitsweise des Verschlusses wird der Füllvorgang erleichtert und gleichzeitig die einwandfreie Dichtigkeit des Verschlusses sichergestellt.

Die Erfindung sieht ferner im Sinne einer einfachen und funktionssicheren Ausführung des Verschlusses vor, dass das Federelement durch einen am Verschlussdeckel angeordneten Nocken gebildet ist, der gegen einen mit ihm zusammenwirkenden Ansatz des Flanschringes angedrückt ist. Ein derartiger Verschluss zeichnet sich dadurch aus, dass der Verschlussdeckel stets mit einem genau bemessenen Drehmoment beauschlagbar ist, das so bemessen ist, dass man es beim Füllvorgang leicht durch Andrücken des Deckels mit dem Mundstück der Spritzpistole überwindet, das aber andererseits stark genug ist, um sofort nach Entfernen der Spritzpistole das feste Zuklappen des Verschlussdeckels gegen den Flanschring des Verschlusses zu bewirken.

Erfindungsgemäss ist der Nocken als ein am Ende der Schwenkachse des Verschlussdeckels sitzender Nockenring ausgebildet, welcher stirnseitig eine teilumfängliche Kurve aufweist, die in Schwenkachsrichtung gegen den mit ihr zusammenwirkenden Ansatz des Flanschringes angedrückt ist. Eine solche Ausführung des Federelements ist konstruktiv kompakt und funktionssicher.

Um ein Überschnappen des Verschlussdeckels zu vermeiden, ist es zweckmässig, wenn der Nockenring eine an der Kurve angrenzende Nut aufweist, in welche der Ansatz des Flanschringes einrastbar ist.

Es ist ferner im Sinne einer einfachen Konstruktion erfindungsgemäss vorgesehen, dass der Verschlussdeckel in zwei am Flanschring in Verlängerung der Schwenkachse angeordneten Drehzapfen lagert.

Es ist hierbei von Vorteil, wenn der Verschluss mit zwei an beiden Enden der Schwenkachse angeordneten Nockenringen versehen ist, welche die Drehzapfen aufnehmen und mit den an deren Sockel vorgesehenen Ansätzen des Flanschringes zusammenwirken. Auf diese Weise ist der Verschlussdeckel beim Auf- und Zuklappen desselben gleichmässig beaufschlagt.

Es ist ferner im Sinne einer möglichst einfachen Fertigung des Verschlusses zweckmässig, wenn der Verschlussdeckel und der Flanschring je zwei annährend parallel zueinander liegende Tragarme aufweisen, an deren frei ausladenden Enden die beiden Nockenringe bzw. die beiden Drehzapfen und die mit den Nockenringen korrespondierenden Ansätze des Flanschringes angeordnet sind. Dadurch ist es möglich, den Verschlussdeckel und den Flanschring mit den Nockenringen bzw. den Drehzapfen und den Ansätzen als zwei Einzelteile aus geeignetem Kunststoff im Spritzgussverfahren herzustellen.

Es ist dabei von Vorteil, wenn die Tragarme an ihren frei ausladenden Enden in Schwenkachsrichtung federnd sind. Dadurch wird der Zusammenbau des Verschlusses erleichtert und auch sichergestellt, dass die Nockenringe stets gegen die mit ihnen zusammenwirkenden Ansätze des Flanschringes angedrückt sind.

Die Erfindung sieht ferner vor, dass der Flanschring einen in das Füllloch einschiebbaren Hals aufweist, der mit mehreren auf dem Umfang verteilt angeordneten Zungen mit Rastelementen versehen ist. Zum Einbauen des Verschlusses in das Füllloch ist es lediglich erforderlich, den Hals des Flanschringes soweit in das Füllloch einzuschieben bis die Rastelemente in der Aussenwand des Füllloches einrasten und somit den Verschluss sicher fixieren.

Die Erfindung wird nachfolgend anhand eines Ausführungsbeispiels unter Bezugnahme auf die Zeichnung näher erläutert. Es zeigen:
- Fig. 1: einen erfindungsgemässen Verschluss im Füllloch eines Kühlschrankes, im eingebauten Zustand und schematisch dargestellt,
- Fig. 2: den Verschluss aus Fig. 1 in geschlossenem Zustand, vergrössert und perspektivisch dargestellt,
- Fig. 3: den Verschluss aus Fig. 1 in geöffnetem Zustand, ebenfalls vergrössert und perspektivisch dargestellt,
- Fig. 4: den Verschluss aus den Fig. 2 und 3, in der Draufsicht dargestellt,
- Fig. 5: den Verschluss aus Fig. 4, in der Vorderansicht,
- Fig. 6: den Verschluss aus Fig. 4, in einem Schnitt entlang der Linie A-A in Fig. 4,
- Fig. 7: den Nockenring gemäss der Einzelheit I aus Fig. 4, vergrössert dargestellt,
- Fig. 8: den Verschluss aus Fig. 4, in der Seitenansicht,
- Fig. 9: den Nockenring aus Fig. 4, in einer Ansicht in Richtung des Pfeils F in Fig. 7,
- Fig. 10: den Nockenring aus Fig. 9, in einem Schnitt entlang der Linie C-C in Fig. 9,
- Fig. 11: den Nockenring aus Fig. 9, in einem Schnitt entlang der Linie D-D in Fig. 9, und
- Fig. 12: den Nockenring aus Fig. 9, in einem Schnitt entlang der Linie E-E in Fig. 9.

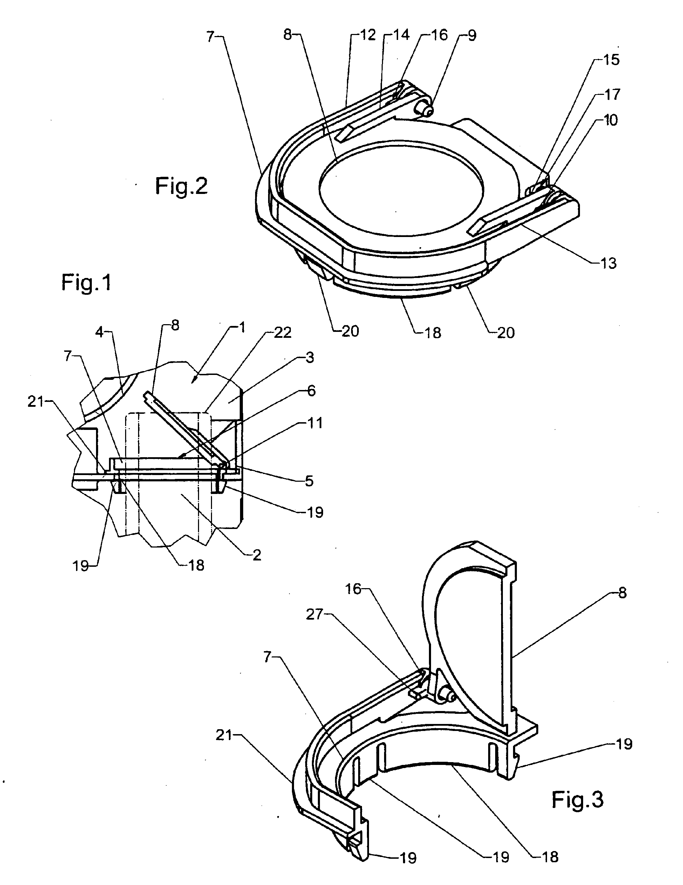

Die in Figur 1 dargestellte Einzelheit eines Kühlschrankes zeigt den Bodenbereich des Kühlschrankgehäuses 1 mit einem Füllloch 2 zum Einbringen eines aufschäumenden Isoliermittels in den Zwischenraum 3 zwischen der Innenwand 4 und der Aussenwand 5 des Gehäuses.

Im Füllloch 2 ist ein Verschluss 6 bestehend aus einem Flanschring 7 und einem auf diesem auf- und zuklappbaren Verschlussdeckel 8 eingebaut. Wie aus Figur 2 ersichtlich, ist letzterer um zwei Drehzapfen 9, 10 des Flanschringes 7 schwenkbar, so dass die Schwenkachse 11 des Verschlussdeckels mit der Mittelachse der Drehzapfen 9, 10 zusammenfällt. Die Drehzapfen 9, 10 sitzen am frei ausladenden Ende zweier annährend parallel zueinander liegenden Tragarme 12, 13 des Flanschringes.

Auch am Verschlussdeckel 8 sind zwei annährend parallel zueinander liegende Tragarme 14, 15 vorgesehen. An deren frei ausladenden Enden sind Federelemente 16, 17 angeordnet, deren Federkraft den Verschlussdeckel 8 mit einem um seine Schwenkachse 11 wirkenden Drehmoment in Schliessrichtung beaufschlagt.

Der Flanschring 7 weist einen in das Füllloch 2 einschiebbaren Hals 18 auf, der mit mehreren auf dem Umfang verteilt angeordneten, elastischen Zungen 19 mit Rastelementen 20 versehen ist. In Figur 1 ist der Verschluss 6 im eingebauten Zustand dargestellt. Der Hals 18 mit den elastischen Zungen 19 ist im Füllloch 2 eingeschoben und die Rastelemente 20 sind in der Aussenwand 5 des Kühlschrankgehäuses eingerastet, womit der Flansch 21 des Flanschringes 7 auf der Aussendwand 5 des Kühlschrankes sicher aufsitzt.

In Figur 1 ist das Mundstück 22 einer Spritzpistole zum Einbringen eines aufschäumenden Isoliermittels in den Zwischenraum 3 des Kühlschrankgehäuses 1 strichpunktiert dargestellt.

Wie aus Figur 1 ersichtlich, wird der Verschlussdeckel 8 beim Füllvorgang mit dem Mundstück 22 der Spritzpistole unter Überwindung des auf den Deckel wirkenden Drehmomentes aufgeklappt, bis das Mundstück voll durch das Füllloch 2 in den Zwischenraum 3 hineinragt. Anschliessend wird das Isoliermittel eingespritzt und danach die Spritzpistole wieder entfernt, wobei der Verschlussdeckel 8 infolge des auf ihn wirkenden Drehmomentes sofort selbsttätig zuklappt und das Füllloch 2 verschliesst, bevor das aufschäumende Isoliermittel den Bereich des Füllloches erreicht hat.

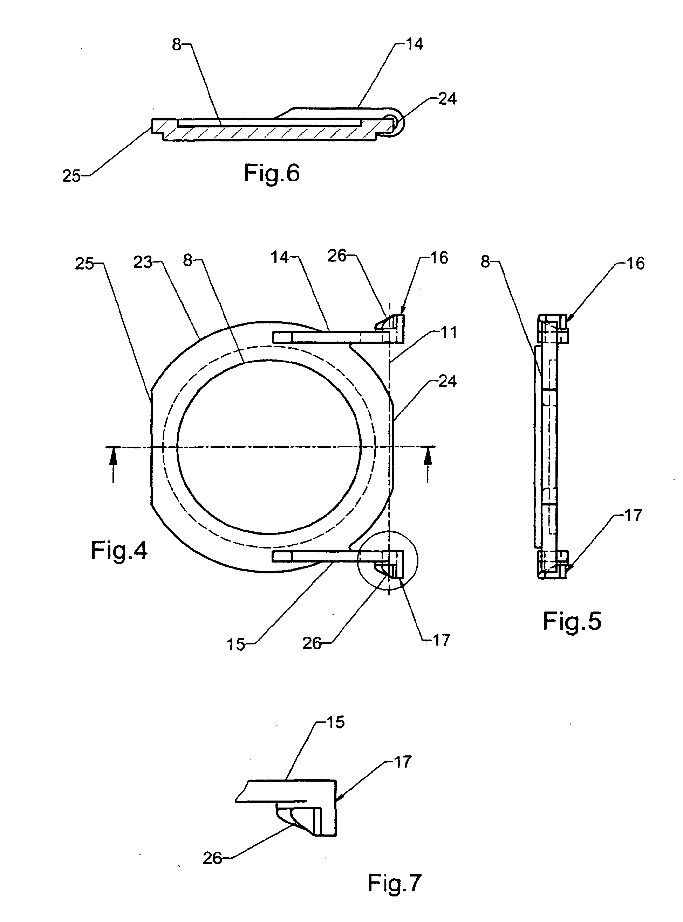

Wie aus den Figuren 1 bis 8 ersichtlich, weist der Verschlussdeckel 8 einen Flansch 23 auf, mit dem er in Schliessstellung gegen den Flansch 21 des Flanschringes 7 angedrückt ist. Im Flansch 23 sind quer zur Schwenkachse 11 zwei den Verschlussumfang begrenzende Abflachungen 24, 25 vorgesehen.

Die Federelemente 16, 17 an beiden Enden der Tragarme 14, 15 weisen einen Nocken 26 auf, der mit einem an den Tragarmen 12, 13 des Flanschringes 7 am Sockel der Drehzapfen 9 bzw. 10 angeordneten Ansatz 27 zusammenwirkt. Durch die federnde Elastizität der Tragarme 12 bis 15 sind die Nocken 26 stets in Schwenkachsrichtung gegen die Ansätze 27 des Flanschringes angedrückt. Durch die paarweise Anordnung der Federelemente 16, 17 ist eine gleichmässige Beanspruchung des Verschlussdeckels 8 sichergestellt.

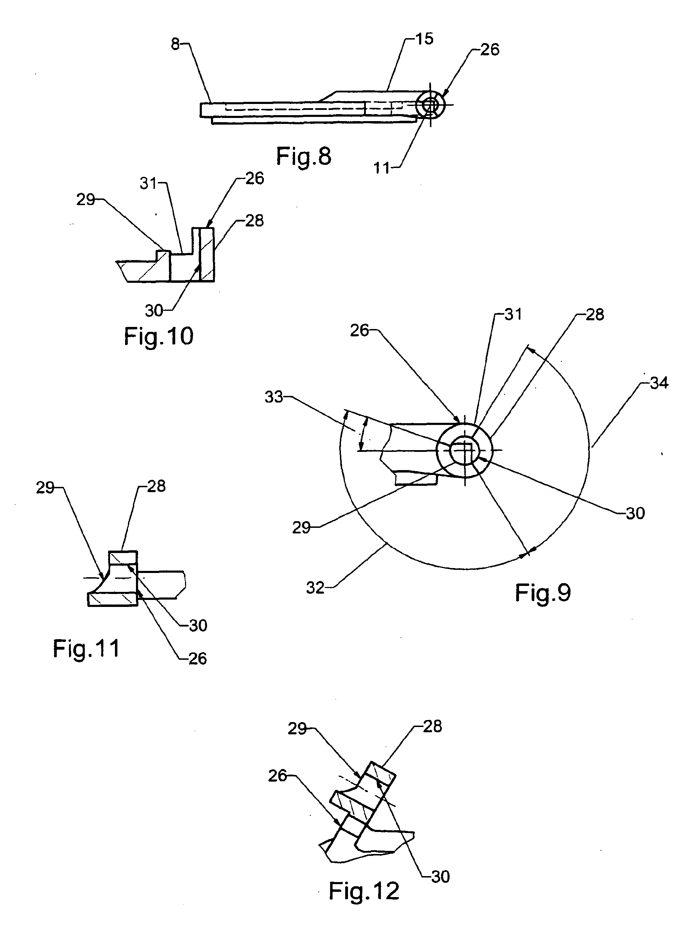

Wie aus den Figuren 9 bis 12 ersichtlich, sind die Nocken 26 als Nockenringe 28 ausgebildet, welche stirnseitig eine teilumfängliche Kurve 29 aufweisen, die im zusammengebauten Zustand in Schwenkachsrichtung gegen den Ansatz 27 des Flanschringes 7 angedruckt ist. Die Nockenringe 28 weisen ausserdem eine mittlere Bohrung 30 auf, in welcher die Drehzapfen 9, 10 geführt sind.

In jedem Nockenring 28 ist auch eine an der Kurve 29 angrenzende Nut 31 vorgesehen, in welcher der mit ihm zusammenwirkende Ansatz 27 des Flanschringes 7 einrastbar ist. Wie aus Figur 9 ersichtlich, erstreckt sich die Kurve 29 über einen Winkel 32 von ca. 140°, beginnend vor der Mittelebene des Verschlussdeckels 8 in einen Winkel 33 von ca. 20° zu dieser Ebene und endend mit einem Winkelbereich 34 von ca. 120°, in welchem die Kurve 29 konstant die maximale Höhe hat. Beim Aufklappen des Verschlussdeckels 8 schwenkt dieser in den Innenraum des Kühlschrankgehäuses soweit ein, bis die Ansätze 27 des Flanschringes 7 in die Nut 31 der Nockenringe 28 einrastet, wodurch dann der Flansch 23 des Verschlussdeckels 8 gegen den Flansch 21 des Flanschringes 7 anschlägt und damit verhindert, dass der Verschlussdeckel überschnappt.

Die Ausbildung der Federelemente 16, 17 als Nockenringe, die mit Ansätzen des Flanschringes 7 zusammenwirken, bietet die Möglichkeit, den Verschluss aus lediglich zwei Teilen aus einem geeigneten Kunststoff im Spritzgussverfahren anzufertigen, was im Sinne einer möglichst wirtschaftlichen Massenproduktion der Geräte vorteilhaft ist. Darüberhinaus sind die Federelemente 16, 17 konstruktiv robust und beanspruchen gleichmässig den Verschlussdeckel 8 mit einem konstante Drehmoment.

Es ist selbstverständlich im Rahmen der Erfindung möglich, den Verschlussdeckel 8 mit nur einem Federelement zu beaufschlagen. Es ist ebenso möglich, statt Nocken etwa Torsionsfedern ohne ähnlich wirkende Federelemente zu verwenden.

## Patentansprüche

1. Verschluss, insbesondere für einen Kühlschrank, mit einem ein Füllloch (2) umfassenden Flanschring (7) und einem auf diesem auf- und zuklappbaren Verschlussdeckel (8), und mit mindestens einem Federelement (16, 17), dessen Federkraft den Verschlussdeckel (8) mit einem um seine Schwenkachse (11) wirkenden Drehmoment in Schliessrichtung beaufschlagt, **dadurch gekennzeichnet, dass**
das Federelement (16, 17) durch einen am Verschlussdeckel (8) angeordneten Nocken (26) zusammenwirkt, der gegen einen mit ihm zusammenwirkenden Ansatz (27) des Flanschringes (7) angedrückt ist,
wobei der Nocken (26) als ein am Ende der Schwenkachse (11) des Verschlussdeckels (8) sitzender Nockenring (28) ausgebildet ist, welcher stirnseitig eine teilumfänglichen Kurve (29) aufweist, die in Schwenkachsrichtung gegen den mit ihr zusammenwirkenden Ansatz (27) des Flanschringes (7) angedrückt ist,
dass der Verschlussdeckel (8) und der Flanschring (7) je zwei annährend parallel zueinander liegende Tragarme (14, 15 bzw. 12, 13) aufweisen,
an deren frei ausladenden Enden jeweils der Nockenring (28) und der mit diesem zusammenwirkende Ansatz (27) angeordnet sind,
wobei die Tragarme (14, 15 bzw. 12, 13) an ihren frei ausladenden Enden in Schwenkachsrichtung federnd ausgebildet sind und damit sichergestellt ist, dass der jeweilige Nockenring (28) stets gegen den mit diesem zusammenwirkenden Ansatz (27) des Flanschringes angedrückt ist.

2. Verschluss nach Anspruch 1, **dadurch gekennzeichnet, dass** der Nockenring (28) eine an der Kurve (29) angrenzende Nut (31) aufweist, in welche der Ansatz (27) des Flanschringes (7) einrastbar ist.

3. Verschluss nach Anspruch 1 oder 2, **dadurch gekennzeichnet, dass** der Verschlussdeckel (8) in zwei am Flanschring (7) in Verlängerung der Schwenkachse (11) angeordneten Drehzapfen (9, 10) gelagert ist.

4. Verschluss nach Anspruch 3, **dadurch gekennzeichnet, dass** der Verschluss mit zwei an beiden Enden der Schwenkachse (11) angeordneten Nockenringen (28) versehen ist, welche die Drehzapfen (9, 10) aufnehmen und mit den an deren Sockeln vorgesehenen Ansätzen (27) des Flanschringes (7) zusammenwirken.

5. Verschluss nach einem der Ansprüche 1 bis 4, **dadurch gekennzeichnet, dass** der Flanschring (7) einen in das Füllloch (2) einschiebbaren Hals (18) aufweist, der mit mehreren auf dem Umfang verteilt angeordneten Zungen (19) mit Rastelementen (20) versehen ist.

## Claims

1. Closure in particular for a refrigerator, with a flange ring (7) comprising a fill-up hole (2) and a closing lid (8), which can be opened and closed on it, and with at least one spring element (16, 17), whose spring force urging the closing lid (8) in the closing-direction with a torque effecting around his swivel axis (11), **characterised in that**
the spring element (16, 17) interacting with a cam (26) arranged at the closing lid (8), which is pressed against a with it cooperating lip (27) of the flange ring (7),
whereas the cam (26) is designed as a cam ring (28) adhering at the end of the swivel axis (11) of the closing lid (8), which has at the front a part a circumference curve (29), which is pressed in the direction of the swivel axis against with it's cooperating lip (27) of the flange ring (7),
that the closing lid (8) and the flange ring (7) each having two brackets (14, 15 resp. 12, 13) lying almost parallel to each other, at each of their free sweeping ends the cam (28) and the with it cooperating lip (27) is arranged,
whereas the brackets (14, 15 resp. 12, 13) are made springy in direction of the swivel axis at their free sweeping ends, and therewith is ensured, that the respective cam ring (28) is constantly pressed against the with it cooperating lip (27) of the flange ring.

2. Closure according to claim 1, **characterised in that** the cam ring (28) has a nut (31) neighbouring to the curve (29), in which the lip (27) of the flange ring (7) is lockable.

3. Closure according to claim 1 and 2, **characterised in that** the closing lid (8) is supported on two swivelling pivots (9, 10), which are arranged at the flange ring (7) in extension of the swivel axis (11).

4. Closure according to claim 3, **characterised in that** the closure is provided with two cam rings (28) at both ends of the swivel axis (11), which are holding the pivots (9, 10) and interacting with the flange ring (7) lips (27) at their sockets.

5. Closure according to claim 1 to 4, **characterised in that** the flange ring (7) has a neck (18), which can be inserted in the fill-up hole (2), which is provided with several on the circumference distributed tongues (19) with locking elements (20).

## Revendications

1. Obturateur, notamment pour réfrigérateur, lequel comporte une collerette annulaire (7), entourant un trou de remplissage (2), et un capot d'obturateur (8) rabattable sur ladite collerette annulaire dans le sens d'une ouverture et d'une fermeture, et au moins un élément élastique (16, 17) dont la force élastique sollicite le capot d'obturateur (8) dans le sens de la fermeture avec un couple de rotation agissant autour de l'axe de pivotement (11) dudit capot d'obturateur, **caractérisé en ce que**
l'élément élastique (16, 17) coopère par le biais d'une came (26) qui est disposée au niveau du capot d'obturateur (8) et qui exerce une pression contre une saillie (27), coopérant avec ladite came, de la collerette annulaire (7),
la came (26) étant conformée en bague de came (28) qui siège à l'extrémité de l'axe de pivotement (11) du capot d'obturateur (8) et qui présente du côté frontal une courbe (29) partiellement circonférentielle qui exerce une pression dans le sens de l'axe de pivotement contre la saillie (27), coopérant avec ladite courbe, de la collerette annulaire (7),
et **en ce que** le capot d'obturateur (8) et la collerette annulaire (7) possèdent chacun deux bras de support (14, 15 resp. 12, 13), à peu près parallèles l'un à l'autre, dont les extrémités en saillie possèdent chacune la bague de came (28) et la saillie (27) coopérant avec celle-ci,
les bras de support (14, 15 resp. 12, 13) étant conformés à leurs extrémités en saillie de façon à être élastiques dans le sens de l'axe de pivotement et garantissant donc que la bague de came (28) respective exerce toujours une pression contre la saillie (27), coopérant avec ladite bague de came, de la collerette annulaire.

2. Obturateur selon la revendication 1, **caractérisé en ce que** la bague de came (28) possède une gorge (31) qui est adjacente à la courbe (29) et dans laquelle la saillie (27) de la collerette annulaire (7) peut s'encliqueter.

3. Obturateur selon la revendication 1 ou 2, **caractérisé en ce que** le capot d'obturateur (8) tourne sur deux tourillons (9, 10) disposés au niveau de la collerette annulaire (7) dans le prolongement de l'axe de pivotement (11).

4. Obturateur selon la revendication 3, **caractérisé en ce que** l'obturateur est doté de deux bagues de came (28) qui sont disposées aux deux extrémités de l'axe de pivotement (11), qui reçoivent les tourillons (9, 10) et qui coopèrent avec les saillies (27) de la collerette annulaire (7), lesquelles sont prévues au niveau de l'embase desdits tourillons.

5. Obturateur selon l'une des revendications 1 à 4, **caractérisé en ce que** la collerette annulaire (7) possède un collet (18) qui peut être inséré dans le trou de remplissage (2) et qui est doté de plusieurs languettes (19) disposées de façon répartie sur la périphérie et comportant des éléments d'encliquetage (20).
